# EUROPEAN PATENT SPECIFICATION

(11) **EP 3 395 550 B1**
(45) Date of publication and mention of the grant of the patent: **27.11.2019**
(21) Application number: 16878033.6
(22) Date of filing: 08.08.2016
(51) Int. Cl.: B29C 67/24, B22F 3/105, B33Y 30/00, B29C 64/153

(54) **THREE-DIMENSIONAL OBJECT SHAPING DEVICE AND MANUFACTURING METHOD**
VORRICHTUNG ZUM FORMEN EINES DREIDIMENSIONALEN OBJEKTS UND HERSTELLUNGSVERFAHREN
DISPOSITIF DE FORMAGE D'OBJET TRIDIMENSIONNEL ET PROCÉDÉ DE FABRICATION

(30) Priority: 24.12.2015 JP 2015252429
(43) Date of publication of application: 31.10.2018
(73) Proprietor: Bridgestone Corporation, Tokyo 104-8340 (JP)
(72) Inventor: SASAKI, Sachio, Tokyo 104-8340 (JP)
(74) Representative: Oxley, Robin John George
(86) International application number: PCT/JP2016/073353
(87) International publication number: WO 2017/110130

(56) References cited:
- EP-A1- 0 289 116
- JP-A- 2009 007 669
- JP-A- 2010 228 332
- JP-A- 2015 009 564
- US-A1- 2015 104 346

## Description

### BACKGROUND OF THE INVENTION

### Field of the Invention

The present invention relates to a three-dimensional object shaping device and a manufacturing method for shaping the three-dimensional object by irradiation of a light beam.

### Related Background of the Invention

When a three-dimensional object is shaped by a laminate shaping, a light beam is irradiated to a shaping material (e.g., powder, liquid) by a light beam irradiation device so as to harden the shaping material. In this way, a hardened layer made of a hardened shaping material is formed and then plural hardened layers are sequentially laminated. The three-dimensional object is a laminated body of the hardened layers, and is shaped into a predetermined three-dimensional shape by forming the hardened layers and laminating the hardened layers repeatedly. However, there is a size limitation of the three-dimensional object depending to a width of the irradiation area where one irradiation device can irradiate the light beam.

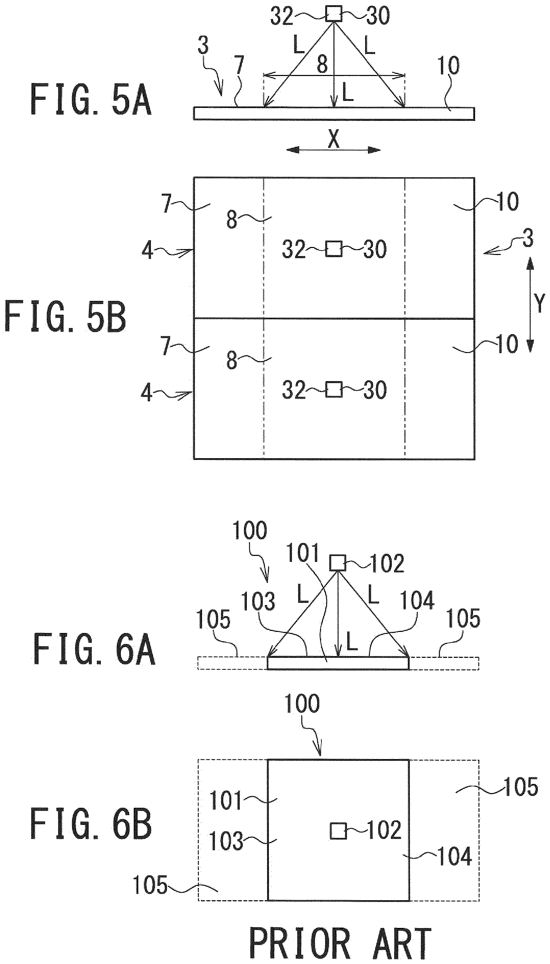

Figs. 6A and 6B are configuration diagrams showing an example of a conventional three-dimensional object shaping device 100 and shows a part of the shaping device 100 schematically. In addition, Fig. 6A is a front view of the shaping device 100, and Fig. 6B is a plan view of the shaping device 100 as viewed from above in Fig. 6A.

As illustrated, the three-dimensional object shaping device 100 comprises a shaping table 101 and an irradiation device 102 for irradiating a light beam L disposed above the shaping table 101. The top surface of the shaping table 101 is a shaping area 103 for the three-dimensional object. The shaping material is supplied to the shaping area 103 and is held on the shaping area 103. In the state, the irradiation device 102 irradiates the light beam L to the shaping area 103 so as to harden the shaping material in the shaping area 103 by the light beam L.

The focal distance of the light beam L from the irradiation device 102 gradually elongates towards the end portion from the central portion of the shaping area 103. Accordingly, this would be likely to have an effect on a precision of the shaping of a hardened layer, and the longer the focal distance is, the more difficult the shaping of the three-dimensional object with good precision is. Therefore, an irradiation area 104 of the light beam L by the irradiation device 102 is set depending on the precision allowed for the three-dimensional object, and the shaping area 103 matches with the irradiation area 104. Since the three-dimensional object with good precision is difficult to shape in an outside area 105 of the irradiation area 104, the three-dimensional object is shaped only in the irradiation area 104.

For coping with this, a manufacturing method to shape a shaped object by an irradiation means having multiple light beam scanning means has been conventionally known (cf. Patent Literature 1).

According to the conventional manufacturing method described in Patent Literature 1, multiple light beams are irradiated to one shaping area by the multiple light beam scanning means so that one shaped object is shaped by the multiple light beams.

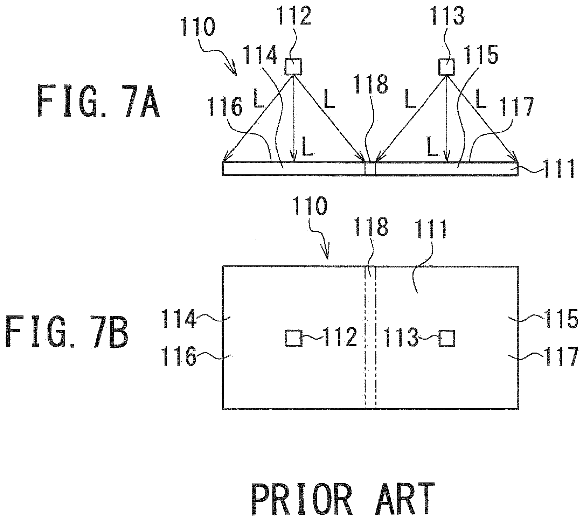

Figs. 7A and 7B are views illustrating an example of a conventional three-dimensional object shaping device 110 to perform a shaping by the multiple light beams L, and schematically shows a part of the shaping device 110 like Figs. 6A and 6B.

As illustrated, the three-dimensional object shaping device 110 comprises a shaping table 111 and two irradiation devices 112, 113 for irradiating the light beams L disposed above the shaping table 111. Two shaping areas 114, 115 and two irradiation areas 116, 117 are set on the top surface of the shaping table 111, and the irradiation devices 112, 113 irradiate the light beams L to the irradiation areas 116, 117, respectively. In this way, the shaping areas 114, 115 are widened, and thus a bigger three-dimensional object can be shaped.

However, when multiple irradiation devices 112, 113 are used for shaping one three-dimensional object, the structure of the shaping device 110 becomes complicated, and the cost of the shaping device 110 is increased. In addition, in a border area 118 located at a border between the two irradiation areas 116, 117, it is difficult to control the shaping by the two irradiation devices 112, 113 and thus the precision of the shaping of the three-dimensional object would likely be decreased. Therefore, a control technology for the shaping in the border area 118 or a new development of a shaping process may be necessary.

### Prior Art

### Patent Literature

Patent Literature 1: Japanese Patent Laid-Open No. 2009-6509. Attention is also drawn to the disclosures of JP2010 228332A, US2015/104346A and EP 0 289 116A.

### SUMMARY OF THE INVENTION

### Problems to be solved by Invention

The present invention was made in view of the above-described conventional problems and an object thereof is that a three-dimensional object that is bigger than an irradiation area of a light beam is simply, easily and precisely shaped by one irradiation device.

### Means for solving Problems

The present invention is a three-dimensional object shaping device as claimed in claim 1.

In addition, this invention is a three-dimensional object manufacturing method as claimed in claim 2.

### EFFECTS OF THE INVENTION

According to the present invention, three-dimensional objects that are bigger than a respective irradiation area of a light beam by one irradiation device can be simply, easily and precisely shaped.

### BRIEF DESCRIPTION OF THE DRAWINGS

Fig. 1 is a configuration diagram showing a three-dimensional object shaping device of a first example, which forms a part of an embodiment of the present invention;
Figs. 2A and 2B are views to explain about a movement of a shaping table in the three-dimensional object shaping device of the first example;
Fig. 3 is a graph showing a change of speed of the shaping table moved by a moving device;
Figs. 4A and 4B are views illustrating a three-dimensional object shaping device which is not according to the invention, but which is useful for understanding the invention;
Figs. 5A and 5B are views illustrating a three-dimensional object shaping device of a first embodiment of the invention;
Figs. 6A and 6B are configuration diagrams showing an example of a conventional three-dimensional object shaping device;
Figs. 7A and 7B are views illustrating an example of the conventional three-dimensional object shaping device to perform a shaping by multiple light beams.

### DESCRIPTION

An embodiment of a three-dimensional object shaping device and a three-dimensional object manufacturing method of the present invention will be described by referring to the attached drawings.

The three-dimensional object shaping device and the three-dimensional object manufacturing method of the present example shape a three-dimensional object that is a laminated body formed by laminating multiple hardened layers through a laminate shaping in which the hardened layers are sequentially laminated. The three-dimensional object is an object (shaped object) having a three-dimensional shape and shaped into a predetermined three-dimensional shape by the laminate shaping. Here, the three-dimensional object is a mold for rubber articles, and is used for the molding of the rubber articles. For example, when the rubber article is a tire, the tire is molded by the three-dimensional object which is a mold for tires.

### (First example)

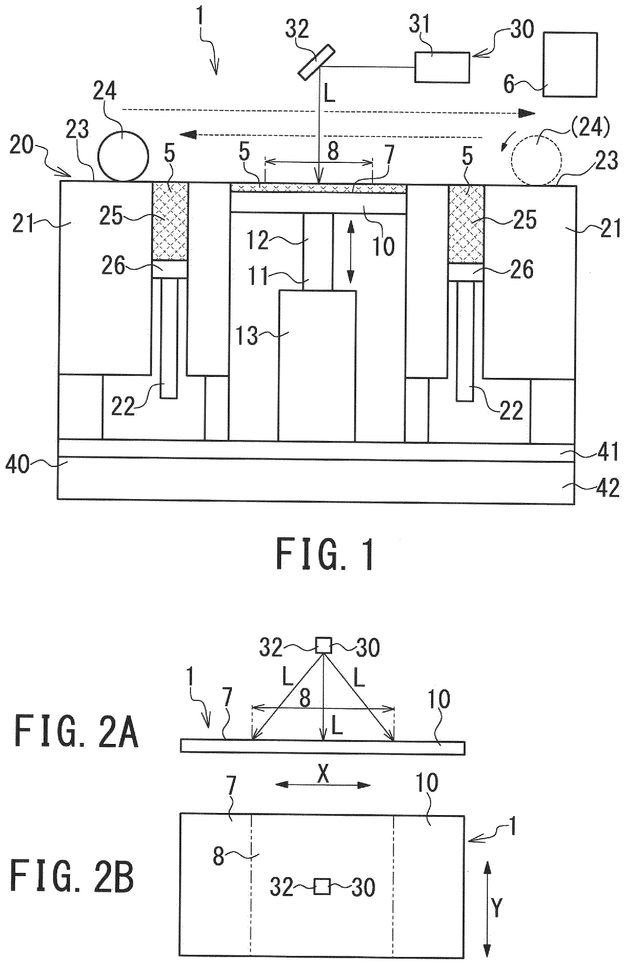

Fig. 1 is a configuration diagram showing a three-dimensional object shaping device 1 of a first example and schematically shows a schematic configuration of the shaping device 1 viewed from the front.

As illustrated, the shaping device 1 comprises a plate-shaped shaping table 10, a lifting device 11 for the shaping table 10, a supply device 20 for supplying a shaping material 5, an irradiation device 30 for irradiating a light beam L, a moving device 40 and a control unit 6 for controlling the whole of the shaping device 1. The control unit 6 controls a shaping operation for the three-dimensional object with the shaping device 1, such that the shaping device 1 shapes a three-dimensional object from the shaping material 5.

The shaping material 5 is a powder (metal powder, resin powder etc.) or a liquid (resin liquid etc.) which is hardened by the light beam L, and is hardened by irradiation of the light beam L so as to form a hardened layer. For example, when the shaping material 5 is a metal powder, the metal powder is heated by the light beam L so as to be sintered. In this way, the metal powder is hardened to form the hardened layer (sintered metal layer) made of a sintered metal powder. When the shaping material 5 is a resin powder, the resin powder is heated by the light beam L so that the melted resin powder is integrated. The integrated resin is solidified and hardened to form the hardened layer (solid resin layer) made of an integrated resin powder. When the shaping material 5 is a liquid (resin liquid) of the photocoagulation resin, the resin liquid is hardened by the light beam L so as to form the hardened layer (solid resin layer) made of a solidified resin liquid. In this way, the hardened layer is formed so as to shape the three-dimensional object made of metal or resin.

The light beam L is a beam-shaped light to harden the shaping material5, and consists of a light (e.g., laser beam, ultraviolet ray) of the predetermined wavelength corresponding to the kind of the shaping material 5. Here, the shaping material 5 is a metal powder, and the light beam L is a laser beam. The shaping material 5 is sintered by the light beam L so as to form the hardened layer made of metal. In addition, the formation of the hardened layers and the lamination of the hardened layers are executed repeatedly such that the three-dimensional object made of metal is shaped. The three-dimensional object is shaped by laminating of the hardened layer and has the multiple hardened layers.

The shaping device 1 is provided with a horizontal shaping area 7, and shapes the three-dimensional object which is a laminated body of the hardened layers made of the shaping material 5 in the shaping area 7. The shaping area 7 is a rectangular top surface of the shaping table 10, and the shaping table 10 holds the shaping material 5 hardened by irradiation of the light beam L in the rectangular shaping area 7. At the time of the shaping of the three-dimensional object, the irradiation device 30 irradiates the light beam L to a rectangular irradiation area 8 in the shaping area 7. The irradiation area 8 of the light beam L is an area (shapable area) where the shaping of the three-dimensional object is possible by the light beam L, and is set, for example, corresponding to the allowable precision of the three-dimensional object. In addition, the irradiation area 8 is an area that is smaller than the shaping area 7, and is located in the shaping area 7.

The shaping table is a rectangular shaping table which is movable in a horizontal direction, and has the shaping area 7 that is larger than the irradiation area 8 of the light beam L. The shaping material 5 is supplied to the shaping area 7 of the shaping table 10 from the supply device 20 and is held in the shaping area 7. In addition, the shaping table 10 is supported by the lifting device 11 and is elevated and lowered in a vertical direction by the lifting device 11. The lifting device 11 has a connecting member 12 connected to the shaping table 10 and a driving mechanism 13. The driving mechanism 13 is, for example, a ball screw mechanism, and moves the connecting member 12 in the vertical direction so as to elevate and lower the shaping table 10.

The supply device 20 has a pair of storage members 21 for storing the shaping material (s) 5, extruding mechanisms 22 for extruding the shaping material (s) 5 and a rotatable roller 24 which is moved between top surfaces 23 of the pair of storage members 21 by a driving device . The storage member 21 has a columnar storing space 25 open to the top surface 23 which is planar and stores the shaping material 5 in the storing space 25. The extruding mechanism 22 has a piston 26 located in the storing space 25 and moves the piston 26 along the inner peripheral surface of the storing space 25. At the time, the piston 26 slides on the inner peripheral surface of the storing space 25. The shaping material 5 is filled from the piston 26 to the top surface 23 of the storage member 21 in the storing space 25, and is pushed out of the storing space 25 by the upward movement of the piston 26.

The shaping table 10 is located between the pair of storage members 21 and is elevated and lowered while being in contact with the side surfaces of the pair of the storage members 21. The top surfaces 23 of the pair of storage members 21 are located at the same height so as to be located in the same plane, and the shaping area 7 of the shaping table 10 is located at a position that is lower than the top surfaces 23 of the pair of storage members 21. In the state, the shaping material 5 is pushed out of the storing space 25 of one storage member 21 by the extruding mechanism 22. Then, the roller 24 is moved from the top surface 23 of one storage member 21 to the top surface 23 of the other storage member 21 while moving the shaping material 5 which was pushed out, so as to supply the shaping material 5 to the shaping area 7.

By the roller 24, the shaping material 5 is evenly supplied to the whole of the shaping area 7, such that a layer of the shaping material 5 of the predetermined thickness is formed on the shaping area 7. Successively, the irradiation device 30 irradiates the light beam L to the layer of the shaping material 5 to harden the shaping material 5, such that a hardened layer of predetermined shape in the layer of the shaping material 5 is formed. As often as one hardened layer is formed, the shaping table 10 is lowered only by the thickness of the layer of the shaping material 5 by the lifting device 11. In addition, the supply device 20 supplies shaping material 5 to the shaping area 7 of the shaping table 10 so as to form the layer of the shaping material 5.

The irradiation device 30 has a light source 31 of the light beam L and an irradiation part 32 of the light beam L, and irradiates the light beam L basedon a control signal outputted from the control unit 6. The light source 31 is a generator for generating a laser beam that is the light beam L, and generates the light beam L towards the irradiation part 32. The irradiation part 32 has a reflecting mirror for reflecting the light beam L towards the irradiation area 8, and is located above the shaping area 7. By reflection of the light beam L by the irradiation part 32, the irradiation device 30 irradiates the light beam L to the irradiation area 8 in the shaping area 7 from above the shaping area 7, such that the shaping material 5 in the irradiation area 8 is hardened.

The irradiation device 30 changes a position of the light beam L irradiated from the irradiation part 32 to the irradiation area 8 by a scanning means so as to scan the whole of the irradiation area 8 by the light beam L. The shaping device 1 shapes the three-dimensional object by irradiating the light beam L to the irradiation area 8 by one irradiation device 30 based on the shape data of the three-dimensional object. At the time, based on the shape data of the hardened layer included in the shape data of the three-dimensional object, the light beam L is irradiated to a forming position of the hardened layer in the irradiation area 8 by the irradiation device 30 so as to harden the shaping material 5. In this way, the multiple hardened layers are sequentially formed and laminated so that the three-dimensional object is gradually shaped.

The moving device 40 has a movable table 41 which is movable in the horizontal direction and a driving part 42 for moving the movable table 41. The driving part 42 moves the movable table 41 by using, for example, a linear motor. The moving device 40 moves the movable table 41 in at least one horizontal direction while controlling a position of the movable table 41 by the driving part 42 so as to locate the movable table 41 at the predetermined position in the horizontal direction. The lifting device 11 of the shaping table 10 and the supply device 20 are placed on the movable table 41 of the moving device 40, and the shaping table 10, the lifting device 11 and the supply device 20 are integrally moved in the horizontal direction by the moving device 40 during forming the hardened layer (during shaping of the three-dimensional object) . Inaddition, in response to the change of a hardening position of the shaping material 5 (forming position of the hardened layer) in the shaping area 7, the moving device 40 moves the shaping table 10 and the shaping area 7 in at least one horizontal direction.

The moving device 40 moves the shaping area 7 of the shaping table 10 in a horizontal plane so that a position of the irradiation area 8 is changed in the shaping area 7. The position of the irradiation area 8 is a position of the irradiation area 8 in the shaping area 7 (a relative position of the irradiation area 8 with respect to the shaping area 7) and is relatively changed in the shaping area 7. By the moving device 40, the shaping area 7 is moved in a horizontal plane, for example, in one horizontal direction or two horizontal directions orthogonal with each other. When the shaping area 7 is moved in one horizontal direction, the position of the irradiation area 8 is changed in the one horizontal direction in the shaping area 7 and is set at the arbitrary position in the one horizontal direction in the shaping area 7. When the shaping area 7 is moved in two horizontal directions orthogonal with each other, the position of the irradiation area 8 is changed in the two horizontal directions in the shaping area 7 and is set at the arbitrary position in the two horizontal directions in the shaping area 7.

Figs. 2A and 2B are views to explain about the movement of the shaping table 10 in the three-dimensional object shaping device 1 of the first example and shows a part of the shaping device 1 schematically. In addition, Fig. 2A is a front view of the shaping device 1, and Fig. 2B is a plan view of the shaping device 1 as viewed from above in Fig. 2A.

As illustrated, the moving device 40 moves the shaping table 10 together with the shaping area 7 in the horizontal direction, so that the position (relative position) of the irradiation area 8 is changed in the shaping area 7. In this way, the position of the irradiation area 8 is changed in the whole of the shaping area 7 and thus it is possible to irradiate the light beam L to the whole of the shaping area 7. In addition, in the whole of the shaping area 7, the light beam L is made possible to irradiate under the same conditions, so that the shaping materials 5 are hardened to an equal state.

Here, the moving device 40 moves the shaping table 10 in only one horizontal direction X (X direction) while maintaining the shaping table 10 and the shaping area 7 to be in a horizontal state. Corresponding to the moving distance in the horizontal direction X of the shaping table 10, the length in the horizontal direction X of the shaping area 7 is elongated so that it is longer than the length in the horizontal direction X of the irradiation area 8, and thus the shaping area 7 is widened in the horizontal direction X compared with the irradiation area 8. In contrast, the shaping table 10 does not move in the other horizontal direction Y (Y direction) orthogonal to one horizontal direction X, and thus the width in the horizontal direction Y of the shaping area 7 is the same as the width in the horizontal direction Y of the irradiation area 8. The shaping area 7 and the irradiation area 8 are set at the same position in the horizontal direction Y, and they meet each other in the horizontal direction Y. In the state, the position of the irradiation area 8 is relatively changed in the horizontal direction X in the shaping area 7.

The irradiation part 32 of the irradiation device 30 is located above the center of the irradiation area 8, and the irradiation device 30 irradiates the light beam L to the whole of the irradiation area 8 from one irradiation part 32. The shaping device 1 synchronizes the irradiation of the light beam L and the movement in the horizontal direction X of the shaping table 10 by the control unit 6 and changes an irradiation position of the light beam L in the shaping area 7 in response to progress of the formation of the hardened layer. At this time, the moving speed of the shaping table 10 is determined based on the strength (or energy) of the light beam L, and the shaping table 10 moves at the moving speed in response to the strength of the light beam L so that the shaping material 5 at the irradiation position of the light beam L is completely hardened. The shaping device 1 hardens the shaping material 5 in the shaping area 7 by the irradiation of the light beam L by using the whole of the horizontal shaping area 7 and shapes a three-dimensional object.

Then, the shaping procedure of the three-dimensional object with the shaping device 1 will be described.

At first, the shaping material 5 is supplied to the shaping area 7 of the shaping table 10 by the supply device 20, and thus a layer of the shaping material 5 is formed in the whole of the shaping area 7. Successively, by the irradiation device 30, the light beam L is irradiated to the irradiation area 8 in the shaping area 7 from above the shaping area 7 so as to harden the shaping material 5 in the irradiation area 8. In addition, the shaping table 10 is moved in the horizontal direction X by the moving device 40 so as to change the position of the irradiation area 8 in the shaping area 7.

By the irradiation of the light beam L and the movement of the shaping table 10, a hardening layer made of a hardened shaping material 5 is formed in the shaping area 7. Successively, the shaping table 10 is lowered by the lifting device 11 and the shaping material 5 is supplied to the shaping area 7 by the supply device 20 so that the next hardened layer is formed on top of the precedent hardened layer. This formation procedure of the hardened layer is repeated so that the multiple hardened layers are laminated. In this way, a three-dimensional object is formed in the shaping area 7 that is wider than the irradiation area 8.

As described above, according to the three-dimensional object shaping device 1 of the first example, the three-dimensional object that is bigger than the irradiation area 8 of the light beam L by one irradiation device 30 can be simply, easily and precisely shaped. Accordingly, the size of the three-dimensional object which can be shaped by one irradiation device 30 can be increased, and thus the shaping efficiency of the three-dimensional object can be improved. In addition, the control technology for the shaping or the shaping process can be restrained to become complicated and a cost increase of the shaping device 1 can be restrained, too.

When the layer of the shaping material 5 is formed in the shaping area 7 of the shaping table 10, the thickness of the layer of the shaping material 5 5-50µm. When the thickness of the layer of the shaping material 5 is smaller than 5µm, the number of forming times of the hardened layer necessary for shaping the three-dimensional object is increased. As a result, the shaping efficiency of the three-dimensional object is decreased, and thus the cost of the three-dimensional object might be raised. In contrast, when the thickness of the layer of the shaping material 5 is bigger than 50µm, level differences of the surface of the three-dimensional object might be enlarged corresponding to the thickness of one hardened layer. When the thickness of the layer of the shaping material 5 is 5-50µm, the shaping efficiency of the three-dimensional object can be surely improved and the level differences of the surface of the three-dimensional object can be lessened.

The square measure of the shaping area 7 is assumed to be S1 and the square measure of the irradiation area 8 is assumed to be S2. In this case, the square measures S1, S2 are set to meet a condition of 1.5 ≤ (S1/S2) ≤ 3.0. When (S1/S2) is smaller than 1.5, the size of the three-dimensional object which can be shaped is limited, even though the cost of shaping device 1 is increased. In contrast, when (S1/S2) is bigger than 3.0, the time for shaping of the three-dimensional object is prolonged, and this would be likely to have an effect on the shaping efficiency of the three-dimensional object. When the square measures S1, S2 meet the condition of 1.5 ≤ (S1/S2) ≤ 3.0, the effect on the shaping efficiency of the three-dimensional object can be reduced while enlarging the size of the three-dimensional object that can be shaped.

Besides, a position of the roller 24 may be fixed in the shaping device 1 without moving the roller 24 of the supply device 20. In this case, the shaping table 10 and the pair of storage members 21 are moved relative to the roller 24, for example, by the moving device 40, so that the shaping material 5 is supplied to the shaping area 7 by the roller 24.

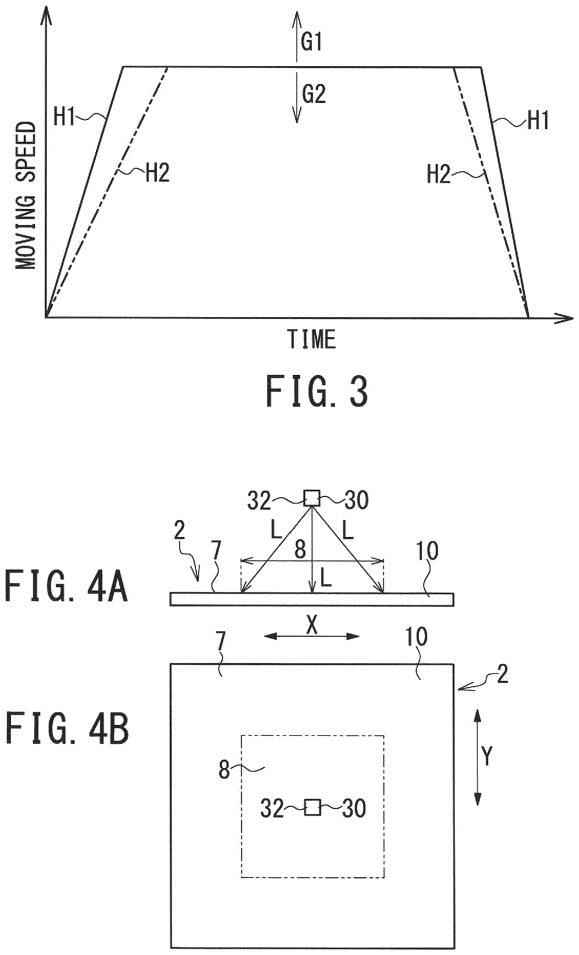

Fig. 3 is a graph showing the change of the speed (moving speed) of the shaping table 10 moved by the moving device 40, and shows two examples (H1, H2) of the change of the moving speed. In Fig. 3, the vertical axis is the moving speed of the shaping table 10, and the horizontal axis is time.

As illustrated, the moving device 40 can change acceleration and the moving speed of the shaping table 10. Therefore, based on the shaping condition (strength of the light beam L, scanning speed of the light beam L, mass of the shaping material 5, kind of the shaping material 5 etc.) of the three-dimensional object, the acceleration and the moving speed of the shaping table 10 can be changed by the moving device 40.

For example, the acceleration of the shaping table 10, based on the mean mass of one powder of the shaping material 5 or the total mass of the layer of the shaping material 5 formed in the shaping area 7, is changed. On this occasion, the acceleration of the shaping table 10 is determined so as not to be moved the shaping material 5 in the shaping area 7. In this way, the shaping precision of the three-dimensional object can be improved. Specifically, since the larger the mean mass or the total mass becomes, the harder to move the shaping material 5 is, the acceleration of the shaping table 10 is increased (H1 of Fig. 3) In contrast, the acceleration of the shaping table 10 is decreased (H2 of Fig. 3) since the smaller the mean mass or the total mass becomes, the easier to move the shaping material 5 is. The movement of the shaping material 5 is restrained by moving the shaping table 10 slowly.

In addition, the moving speed of the shaping table 10 is changed based on a scanning speed of the light beam L (arrows G1, G2 in Fig. 3). When the scanning speed of the light beam L is fast or the moving speed of the shaping table 10 is slow, it is necessary to stop the irradiation of the light beam L once in response to the movement of the shaping table 10. In contrast, when the scanning speed of the light beam L is slow or the moving speed of the shaping table 10 is fast, it would be likely to have the effect on the shaping efficiency of the three-dimensional object. But, it is not necessary to stop the movement of the shaping table 10 once in response to the scanning of the light beam L because the scanning speed of the light beam L is faster than the moving speed of the shaping table 10. Taking such relations of the scanning speed of the light beam L and the moving speed of the shaping table 10 into consideration, the moving speed of the shaping table 10 is determined. On this occasion, the most suitable moving speed of the shaping table 10 is determined so that the shaping precision of the three-dimensional object is improved or the effective shaping time for the three-dimensional object is obtained.

Next, shaping devices of a second example, which is not according to the present invention and a first embodiment, which is in accordance with the present invention, will be described, but the shaping devices of the second example, and the first embodiment, are constituted basically like the shaping device 1 of the first example. Therefore, in the following, a matter differing from the matter which is already described will be described and the description of the same matter as the matter which has been already described is omitted. In addition, with respect to the shaping devices of the second example and the first embodiment, the same names and reference marks given to the components of the shaping device 1 are used for components corresponding to the components that the shaping device 1 of the first example includes.

### (Second example)

Figs. 4A and 4B are views illustrating a three-dimensional object shaping device 2 of the second example and schematically illustrates a part of the shaping device 2 like Figs. 2A and 2B.

As illustrated, in the three-dimensional object shaping device 2 of the second example, the moving device 40 moves the shaping table 10 in two horizontal directions X, Y (X-Y directions) orthogonal to each other. The moving device 40 moves the shaping table 10 together with the shaping area 7 in the horizontal directions X, Y so that the position of the irradiation area 8 is changed in the shaping area 7.

The driving part 42 of the moving device 40 has a moving mechanism to move the movable table 41 in the two horizontal directions X, Y, and the movable table 41 of the moving device 40 is connected to the moving mechanism of the driving part 42. The moving mechanism of the driving part 42 has, for example, the first table movable in the horizontal direction X, the second table which is placed on the first table and movable in the horizontal direction Y and two linear motors for moving the first and the second table, respectively. The moving device 40 moves the movable table 41 in the two horizontal directions X, Y while controlling a position of the movable table 41 by the driving part 42 and locates the movable table 41 at the predetermined position in the horizontal directions X, Y.

Corresponding to the moving distances in the horizontal directions X, Y of the shaping table 10, the length in the horizontal direction X of the shaping area 7 is elongated so that it is longer than the length in the horizontal direction X of the irradiation area 8 and the length in the horizontal direction Y of the shaping area 7 is elongated so that it is longer than the length in the horizontal direction Y of the irradiation area 8, respectively. The shaping area 7 becomes wide in the horizontal direction X and the horizontal direction Y compared with the irradiation area 8 and the position of the irradiation area 8 is relatively changed in the horizontal direction X and the horizontal direction Y in the shaping area 7. The shaping device 2 synchronizes the irradiation of the light beam L, the movement in the horizontal direction X of the shaping table 10 and the movement in the horizontal direction Y of the shaping table 10 by the control unit 6 and, causes an irradiation position of the light beam L to change in the shaping area 7 in response to the progress of forming the hardened layer.

In the three-dimensional object shaping device 2 of the second example, the shaping area 7 can be widened in the two horizontal directions X, Y orthogonal to each other compared with the irradiation area 8. Therefore, the size of the three-dimensional object which can be shaped by one irradiation device 30 can be made larger.

### (First embodiment)

Figs. 5A and 5B are views illustrating a three-dimensional object shaping device 3 of the first embodiment and schematically illustrates a part of the shaping device 3 like Figs. 2A and 2B.

As illustrated, the three-dimensional object shaping device 3 of the first embodiment comprises plural pairs of shaping units 4. Each of the shaping units 4 is a shaping device which is the same as the three-dimensional object shaping device 1 of the first embodiment and has the same constitution as that of the shaping device 1. Therefore, each of the multiple shaping units 4 has the irradiation device 30, the shaping table 10 and the moving device 40 and shapes a three-dimensional object like the shaping device 1.

The moving device 40 moves the shaping table 10 in one horizontal direction X. The plural pairs of shaping units 4 are juxtaposed in the horizontal direction Y orthogonal to the horizontal direction X and are operated independently each other. The shaping device 3 shapes the three-dimensional object by each of the plural pairs of shaping units 4 juxtaposed and shapes the multiple three-dimensional objects at the same time. On this occasion, the control unit 6 controls a shaping operation for the three-dimensional object with each shaping unit 4 and makes shaping of the three-dimensional objects progress each with the plural pairs of shaping units 4.

By the three-dimensional object shaping device 3 of the first embodiment, the multiple three-dimensional objects can be shaped at the same time and the shaping efficiency of the multiple three-dimensional objects can be improved. Particularly, when the three-dimensional object has a shape that is elongated in the horizontal direction X rather than in the horizontal direction Y, the multiple three-dimensional objects can be effectively shaped, and the shaping time of the multiple three-dimensional objects can be shorten in response to the number of shaping units 4.

### Reference Signs List

1...three-dimensional object shaping device
2...three-dimensional object shaping device
3...three-dimensional object shaping device
4...shaping unit
5...shaping material
6...control unit
7...shaping area
8...irradiation area
10...shaping table
11...lifting device
12...connecting member
13...driving mechanism
20...supply device
21...storage member
22...extruding mechanism
23...top surface
24...roller
25...storing space
26...piston
30...irradiation device
31...light source
32...irradiation part
40...moving device
41...movable table
42...driving part
L...light beam

## Claims

1. A three-dimensional object shaping device (3) for shaping a three-dimensional object that is a laminated body of hardened layers made of a shaping material (5), in a horizontal shaping area (7) which holds the shaping material (5) hardened by irradiation of a light beam (L), wherein the three-dimensional object shaping device comprises plural pairs of shaping units, each shaping unit comprising:
an irradiation device (30) which irradiates the light beam (L) to an irradiation area (8) in the shaping area (7) from above the shaping area (7);
a movable shaping table (41) which has the shaping area (7) that is larger than the irradiation area (8); and
a moving device (40) which moves the shaping table (41) in a horizontal direction so as to change a position of the irradiation area (8) in the shaping area (7), wherein:
the thickness of the layer of the shaping material (5) is 5-50µm;
the square measures of the shaping areas S1 to the square measures of the irradiation area S2 is 1.5 ≤ (S1/S2) ≤ 3.0;
the moving devices are configured to increase the acceleration of the respective shaping table (41) as the mean or total mass of the shaping material (5) increases, and are configured to move in one horizontal direction X; and
the plural pairs of shaping units are juxtaposed in a horizontal direction Y orthogonal to the horizontal direction X and are operated independently of each other.

2. A three-dimensional object manufacturing method for shaping three-dimensional objects that is a laminated body of hardened layers made of a shaping material (5) with plural pairs of shaping units, which are juxtaposed in a horizontal direction Y orthogonal to a horizontal direction X and are operated independently of each other, each unit having a respective horizontal shaping area (7) which each hold shaping material (5) hardened by irradiation of a respective light beam (L), comprising steps of;
irradiating an irradiation area (8) in each shaping area (7) with the respective light beam (L) from above each shaping area (7) by a respective irradiation device (30), and
moving shaping tables (41), each having one of the respective shaping areas (7) that is larger than the respective irradiation area (8) in one horizontal direction X by a respective moving device (40) so that a position of the respective irradiation area (8) in the shaping area (7) is changed, wherein
the thickness of the layer of the shaping material (5) is 5-50µm;
the square measures of the shaping areas S1 to the square measures of the irradiation area S2 is 1.5 ≤ (S1/S2) ≤ 3.0;
the acceleration of the respective shaping table (41) increases as the mean or total mass of the shaping material (5) increases.

## Patentansprüche

1. Formvorrichtung (3) für ein dreidimensionales Objekt zum Formen eines dreidimensionalen Objekts, das ein geschichteter Körper aus gehärteten Lagen ist, die aus einem Formungsmaterial (5) hergestellt sind, in einem horizontalen Formungsbereich (7), der das Formungsmaterial (5) hält, das durch Einstrahlung eines Lichtstrahls (L) gehärtet wird, wobei die Formvorrichtung für ein dreidimensionales Objekt mehrere Paare von Formungseinheiten umfasst, wobei jede Formungseinheit Folgendes umfasst:
eine Bestrahlungsvorrichtung (30), die den Lichtstrahl (L) zu einem Bestrahlungsbereich (8) in dem Formungsbereich (7) von oberhalb des Formungsbereichs (7) einstrahlt,
einen beweglichen Formungstisch (41), der den Formungsbereich (7) aufweist, der größer ist als der Bestrahlungsbereich (8), und
eine Bewegungsvorrichtung (40), die den Formungstisch (41) in einer horizontalen Richtung bewegt, um so eine Position des Bestrahlungsbereichs (8) in dem Formungsbereich (7) zu ändern, wobei:
die Dicke der Lage des Formungsmaterials (5) 5 bis 50 µm beträgt,
die Flächenmaße der Formungsbereiche S1 zu den Flächenmaßen des Bestrahlungsbereichs S2 1,5 ≤ (S1/S2) ≤ 3,0 sind,
die Bewegungsvorrichtungen dafür konfiguriert sind, die Beschleunigung des jeweiligen Formungstischs (41) zu steigern, wenn die mittlere oder gesamte Masse des Formungsmaterials (5) zunimmt, und dafür konfiguriert sind, sich in einer horizontalen Richtung X zu bewegen, und
die mehreren Paare von Formungseinheiten in einer horizontalen Richtung Y, senkrecht zu der horizontalen Richtung X, nebeneinandergestellt sind und unabhängig voneinander betrieben werden.

2. Herstellungsverfahren für ein dreidimensionales Objekt zum Formen von dreidimensionalen Objekten, die ein geschichteter Körper aus gehärteten Lagen sind, die aus einem Formungsmaterial (5) hergestellt sind, mit mehreren Paaren von Formungseinheiten, die in einer horizontalen Richtung Y, senkrecht zu einer horizontalen Richtung X, nebeneinandergestellt sind und unabhängig voneinander betrieben werden, wobei jede Einheit einen jeweiligen horizontalen Formungsbereich (7) aufweist, der jeweils Formungsmaterial (5) hält, das durch Einstrahlung eines jeweiligen Lichtstrahls (L) gehärtet wird, wobei das Verfahren folgende Schritte umfasst:
Bestrahlen eines Bestrahlungsbereichs (8) in jedem Formungsbereich (7) mit dem jeweiligen Lichtstrahl (L) von oberhalb jedes Formungsbereichs (7) durch eine jeweilige Bestrahlungsvorrichtung (30),
Bewegen von Formungstischen (41), die jeweils einen der jeweiligen Formungsbereiche (7) aufweisen, der größer ist als der jeweilige Bestrahlungsbereich (8), in einer horizontalen Richtung X durch eine jeweilige Bewegungsvorrichtung (40), so dass eine Position des jeweiligen Bestrahlungsbereichs (8) in dem Formungsbereich (7) geändert wird, wobei
die Dicke der Lage des Formungsmaterials (5) 5 bis 50 µm beträgt,
die Flächenmaße der Formungsbereiche S1 zu den Flächenmaßen des Bestrahlungsbereichs S2 1,5 ≤ (S1/S2) ≤ 3,0 sind,
die Beschleunigung des jeweiligen Formungstischs (41) zunimmt, wenn die mittlere oder gesamte Masse des Formungsmaterials (5) zunimmt.

## Revendications

1. Dispositif de formage d'objet tridimensionnel (3) pour former un objet tridimensionnel qui est un corps stratifié de couches durcies composées d'un matériau de formage (5), dans une zone de formage horizontale (7) retenant le matériau de formage (5) durci par irradiation d'un faisceau lumineux (L), le dispositif de formage d'objet tridimensionnel comprenant plusieurs paires d'unités de formage, chaque unité de formage comprenant :
un dispositif d'irradiation (30) irradiant le faisceau lumineux (L) sur une zone d'irradiation (8) dans la zone de formage (7), d'en haut de la zone de formage (7) ;
une table de formage mobile (41) comportant la zone de formage (7) qui est plus large que la zone d'irradiation (8) ; et
un dispositif à déplacement (40) déplaçant la table de formage (41) dans une direction horizontale, de sorte à changer une position de la zone d'irradiation (8) dans la zone de formage (7), dans lequel :
l'épaisseur de la couche de matériau de formage (5) est comprise entre 5 et 50 µm ;
le rapport entre les mesures carrées des zones de formage S1 et les mesures carrées de la zone d'irradiation S2 correspond à 1,5 ≤ (S1/S2) ≤ 3,0 ;
les dispositifs à déplacement sont configurés pour accroître l'accélération de la table de formage respective (41), lorsque le poids moyen ou le poids total du matériau de formage (5) augmente, et sont configurés pour se déplacer dans une direction horizontale X ; et
les plusieurs paires d'unités de formage sont juxtaposées dans une direction horizontale Y orthogonale à la direction horizontale X et sont actionnées indépendamment les unes des autres.

2. Procédé de fabrication d'un objet tridimensionnel pour former des objets tridimensionnels qui est un corps stratifié de couches durcies composées d'un matériau de formage (5), avec plusieurs paires d'unités de formage, juxtaposées dans une direction horizontale Y orthogonale à une direction horizontale X, et qui sont actionnées indépendamment les unes des autres, chaque unité comportant une zone de formage horizontale respective (7), retenant chacune le matériau de formage (5) durci par irradiation d'un faisceau lumineux respectif (L), comprenant les étapes ci-dessous :
irradiation d'une zone d'irradiation (8) dans chaque zone de formage (7) en émettant le faisceau lumineux respectif (L) d'en haut sur chaque zone de formage (7) par l'intermédiaire d'un dispositif d'irradiation respectif (30) ; et
déplacement de tables de formage (41) comportant chacune une des zones de formage respectives (7), qui est plus large que la zone d'irradiation respective (8), dans une direction horizontale X par un dispositif à déplacement respectif (40), de sorte qu'une position de la zone d'irradiation respective (8) dans la zone de formage (7) est changée ; dans lequel
l'épaisseur de la couche de matériau de formage (5) est comprise entre 5 et 50 µm ;
le rapport entre les mesures carrées des zones de formage S1 et les mesures carrées de la zone d'irradiation S2 correspond à 1,5 ≤ (S1/S2) ≤ 3,0 ;
l'accélération de la table de formage respective (41) augmente lorsque le poids moyen ou le poids total du matériau de formage (5) augmente.
